Europäisches Patentamt

European Patent Office

Office européen des brevets

(19)

(11) Numéro de publication: **0 068 934**
**B2**

(12) **NOUVEAU FASCICULE DE BREVET EUROPEEN**

(45) Date de publication du nouveau fascicule du brevet: **11.04.90**

(51) Int. Cl.⁵: **H 01 H 71/12**

(21) Numéro de dépôt: **82401001.1**

(22) Date de dépôt: **01.06.82**

(54) **Disjoncteur multipolaire à boîtier moulé et à déclencheur statique.**

(30) Priorité: **05.06.81 FR 8111354**

(43) Date de publication de la demande:
**05.01.83 Bulletin 83/01**

(45) Mention de la délivrance du brevet:
**25.09.85 Bulletin 85/39**

(45) Mention de la decision concernant l'opposition:
**11.04.90 Bulletin 90/15**

(84) Etats contractants désignés:
**BE CH DE GB IT LI NL SE**

(56) Documents cités:
**DE-B-1 802 457**
**US-A-3 761 776**
**US-A-3 821 607**
**US-A-4 209 817**

(73) Titulaire: **MERLIN GERIN**
**Rue Henri Tarze**
**F-38050 Grenoble Cédex (FR)**

(72) Inventeur: **Barnel, Pierre**
**Merlin Gerin Rue Henri Tarze**
**F-38050 Grenoble Cedex (FR)**
Inventeur: **Bertrand, Claude**
**Merlin Gerin Rue Henri Tarze**
**F-38050 Grenoble Cedex (FR)**
Inventeur: **Denis, Robert**
**Merlin Gerin Rue Henri Tarze**
**F-38050 Grenoble Cedex (FR)**
Inventeur: **Nebon, Jean-Pierre**
**Merlin Gerin Rue Henri Tarze**
**F-38050 Grenoble Cedex (FR)**

(74) Mandataire: **Kern, Paul et al**
**Merlin Gerin Sce. Brevets 20, rue Henri Tarze**
**F-38050 Grenoble Cédex (FR)**

EP 0 068 934 B2

Courier Press, Leamington Spa, England.

## Description

L'invention est relative à un disjoncteur multipolaire à boîtier moulé et à déclencheur statique, comprenant un dispositif électronique de traitement de signaux délivrés par des transformateurs de courant associés à chaque pôle, ledit dispositif électronique de traitement appartenant à un sous-ensemble inséré dans un compartiment du boîtier moulé et délivrant un signal de déclenchement à un relais de déclenchement en cas de surcharge ou de court-circuit, ledit compartiment étant isolé d'une manière étanche de la partie restante de l'enceinte confinée par le boîtier moulé, ledit boîtier comprenant des orifiecs de ventilation et etant constitué d'une base et d'un couvercle de telle façon que le dispositif électronique de traitement soit abrité des gaz de coupure engendrés dans l'enceinte, lesdits transformateurs de courant étant logés dans ladite restante de l'enceinte.

Un disjoncteur connu (US-A- 3761776) du genre mentionné comporte un bloc étanche de logement de la partie électronique du déclencheur statique, ce bloc étant disposé d'une manière amovible à l'intérieur du boîtier moulé du disjoncteur. Le bloc étanche empêche toute pénétration des gaz de coupure et évite un endommagement de la partie électronique par ces gaz. Le bloc implanté à proximité des transformateurs de courant et des conducteurs de puissance du disjoncteur est soumis à un échauffement important susceptible d'affecter le bon fonctionnement du déclencheur.

La présente invention a pour but de remédier à cet inconvénient et de permettre la réalisation d'un disjoncteur à déclencheur statique à fonctionnement fiable.

Le disjoncteur selon l'invention est caractérisé par le fait que ledit compartiment est confiné par une et par des parties des parois du couvercle, cloison étanche qui sépare le compartiment de ladite partie restante de l'enceinte dont au moins une paroi comporte des orifices de ventilation de manière à mettre librement en communication l'intérieur du compartiment et le milieu ambiant, et à permettre une libre circulation de l'air dans le compartiment et un refroidissement du dispositif électronique de traitement.

La séparation étanche entre la partie électromécanique du disjoncteur et la partie électronique met cette dernière à l'abri de toute pollution due à la coupure et limite les échauffements par conduction et convection. La libre communication du compartiment avec le milieu ambiant assure un refroidissement efficace par convection naturelle, de façon à éviter tout échauffement de la partie électronique. Les orifices de ventilation peuvent bien entendu être munis de filtre ou de tout autre dispositif empêchant la pénétration de particules dans ledit compartiment.

Selon un développement de l'invention, le sous-ensemble électronique comporte une cloison de séparation, qui assure l'isolation étanche entre le compartiment et la partie restante de l'enceinte. Il est alors avantageux d'incorporer le relais de déclenchement audit sous-ensemble en disposant ce relais du côté de la cloison orienté vers l'enceinte du disjoncteur. On évite ainsi toute transmission mécanique entre le compartiment de logement du déclencheur statique et la partie restante de l'enceinte.

Selon un autre développement de l'invention, le sous-ensemble de déclenchement statique est monté amovible et comporte des conducteurs de raccordement aux transformateurs de courant du disjoncteur, équipés de dispositifs de connexion. Selon une caractéristique importante de l'invention, les dispositifs de connexion sont agencés pour permettre, d'une part un court-circuitage des transformateurs de courant et d'autre part un détrompage, évitant toute erreur de branchement lors de la mise en place du sous-ensemble. Lors de l'enlèvement du sous-ensemble, on court-circuite les transformateurs de courant pour protéger les manipulateurs contre les risques d'électrocution, et d'autre part éviter toute destruction de ces transformateurs de courant due à des surtensions. L'échange des sous-ensembles est ainsi simplifié et peut être réalisé en toute sécurité.

D'autres avantages et caractéristiques ressortiront plus clairement de la description qui va suivre d'un mode de mise en oeuvre de l'invention, donné à titre d'exemple non limitatif et représenté à titre d'exemple aux dessins annexés, dans lesquels:

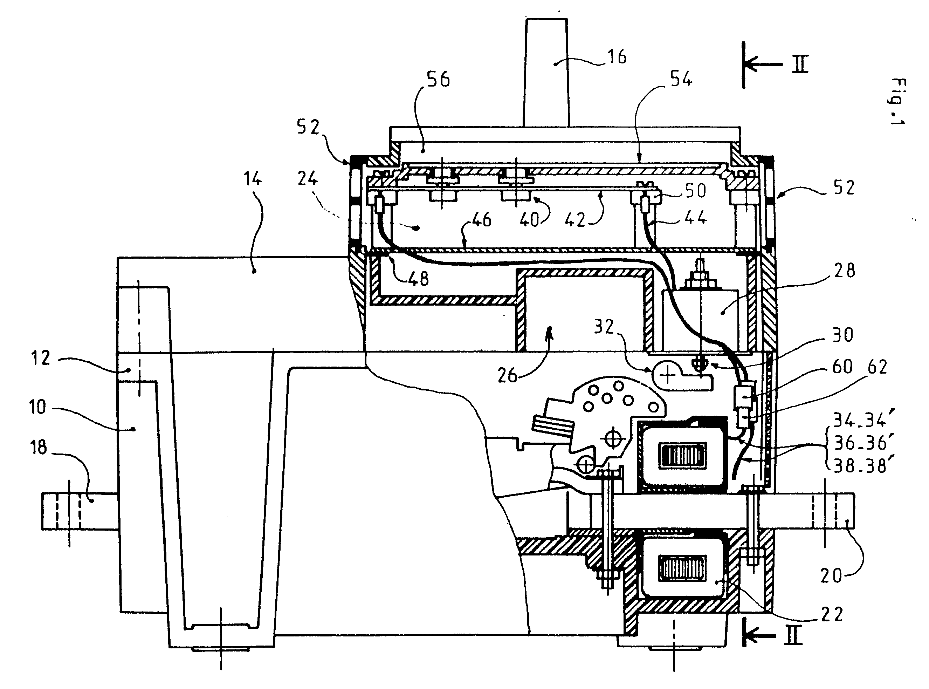

La figure 1 est une vue schématique en élévation partiellement arrachée d'un disjoncteur équipé d'un déclencheur statique selon l'invention;

la figure 2 est une vue de côté partiellement en coupe suivant la ligne II-II de la figure 1;

la figure 3 est une vue de détail, montrant une connexion de court-circuitage d'un transformateur de courant du disjoncteur selon la figure 1;

Les figures 4 et 5 montrent un dispositif de connexion, respectivement en position connectée et en position déconnectée du déclencheur statique aux transformateurs de courant.

Sur les figures, un boîtier moulé 10 d'un disjoncteur multipolaire basse tension est constitué par une base 12 et un couvercle 14, ce dernier étant traversé par une manette de commande manuelle 16. A l'intérieur du boîtier 10 sont disposés trois pôles dont seules les plages d'entrée 18 et de sortie 20 sont visibles sur les figures. A chaque plage 20 ou conducteur de sortie est associé un transformateur de courant 22 en forme de tore, dont l'enroulement secondaire délivre un signal représentatif de l'intensité du courant parcourant le pôle. Du côté des plages de sortie 20 est ménagé à l'intérieur du boîtier moulé 10 un compartiment 24 susceptible de recevoir un sous-ensemble, désigné par le repère général 26, de déclenchement statique. Dans l'exemple illustré par les figures, le compartiment 24 ne s'étend que sur une partie de la largeur du boîtier 10 correspondant à l'un des pôles d'extrémité, de manière à laisser l'espace central disponible au mécanisme de commande du disjoncteur. Le sous-ensemble de déclenchement 26 comporte un relais de déclenchement 28, par exemple un relais polarisé, dont l'armature ou le noyau plongeur 30 coopère avec une barre de déclenchement 32. Les trois transformateurs de courant 22 des trois pôles du disjoncteur sont reliés par trois paires de conducteurs 34, 34', 36, 36', et 38, 38' à un dispositif électronique de traitement dont les composants 40 sont portés par un support isolant en forme de carte 42. Le dispositif de traitement délivre un signal de déclenchement au relais de déclenchement 28 par des conducteurs 44.

Il est inutile de décrire plus en détail un disjoncteur du genre mentionné, qui est bien connu des spécialistes, et il suffit de rappeler que le dispositif de traitement électronique délivre un signal de déclenchement automatique du disjoncteur en cas de surcharge et/ou de court-circuit détecté par les transformateurs de courant 22. Le dispositif de traitement comporte par exemple un circuit de déclenchement court retard provoquant le déclenchement lors d'un court-circuit et un circuit long retard intervenant en cas de surcharge prolongée.

Selon la présente invention, le sous-ensemble 26 comporte une cloison 46, dont le pourtour coopère d'une manière étanche, par exemple par interposition d'un joint souple 48 périphérique, avec les parois du boîtier 10, de manière à créer une séparation étanche entre le compartiment 24 et la partie restante de l'enceinte du boîtier moulé 10. La carte 42 portant les dispositifs électroniques de traitement, est disposé dans le compartiment 24, tandis que le relais de déclenchement 28 est disposé du côté opposé de la cloison 46 dans l'enceinte du boîtier moulé 10. Le conducteur 44 traverse d'une manière étanche la cloison 46 ainsi que les conducteurs de raccordement 34 à 38 aux transformateurs de courant 22. La carte 42 est espacée de la cloison 46 en étant supportée par des colonnettes 50 pour permettre une libre circulation de l'air de refroidissement pénétrant à l'intérieur du compartiment 24 par des orifices de ventilation 52 ménagés dans les parois externes du boîtier 10 au niveau du compartiment 24. Le sous-ensemble 26 comporte une plaque supérieure 54 espacée de la carte 42 et venant en position fermée du couvercle 14 en regard d'une lumière 56 ménagée dans la partie supérieure du couvercle 14. La plaque supérieure 54 peut porter des éléments de règlage et des éléments indicateurs du déclencheur statique. Le sous-ensemble 26 constitue une partie amovible pouvant être mise en place et fixée au socle 12 par des vis 58, le couvercle 14 étant enlevé. Les conducteurs de raccordement 34 à 38 comportent bien entendu un dispositif de connexion décrit en détail ci-après. Le couvercle 14 s'emboîte sur la cloison 46, qui assure l'étanchéité entre le compartiment 24 et l'enceinte du boîtier moulé 10 comportant la partie électromécanique du disjoncteur.

Il est facile de comprendre que la cloison étanche 46 empêche toute pollution par des gaz de coupure des composants électroniques 40 portés par la carte 42, cette cloison étanche 46 limitant de plus la transmission de calories dégagées par les transformateurs de courant 22 et les pièces conductrices, notamment les plages de sortie 20. Les orifices de ventilation 52 permettent une libre circulation de l'air dans le compartiment 24 et un refroidissement par convection du dispositif électronique de traitement assurant ainsi une fiabilité de fonctionnement et un maintien des caractéristiques de déclenchement. Les dimensions des orifices de ventilation 52 peuvent être suffisamment faibles pour empêcher toute introduction d'impuretés à l'intérieur du compartiment 24 ou des grilles ou filtres peuvent être associés à ces orifices de ventilation 52. La seule communication entre le compartiment 24 et la partie restante de l'enceinte est réalisée par les conducteurs de raccordement 44 et 34 à 38 dont les traversées étanches sont faciles à réaliser. Le déclencheur statique constitue un sous-ensemble 26 amovible après enlèvement du couvercle 14 et facilement interchangeable.

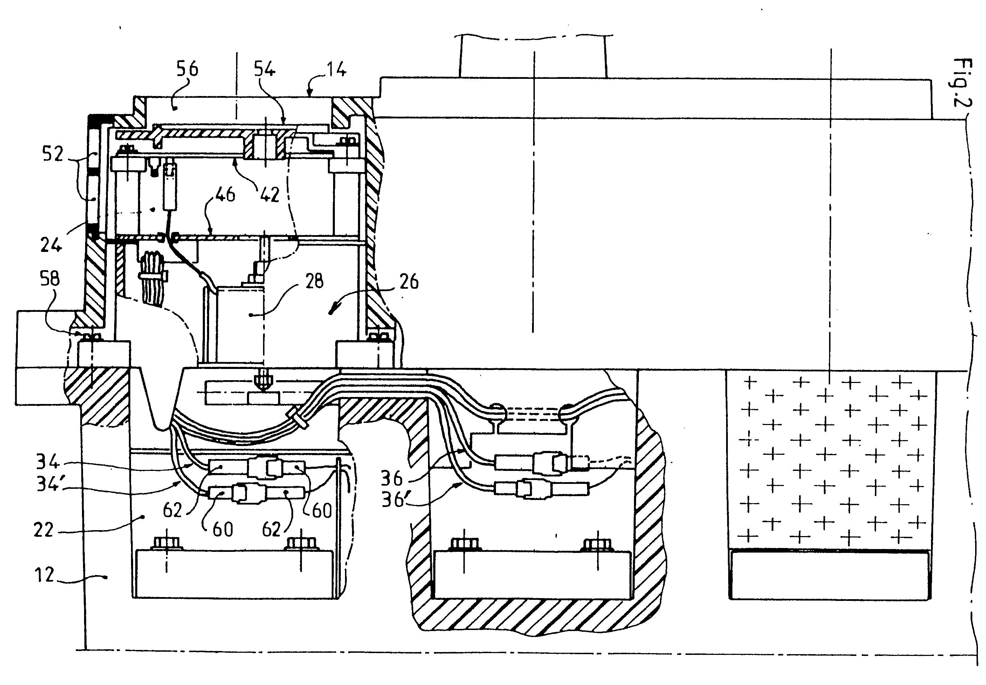

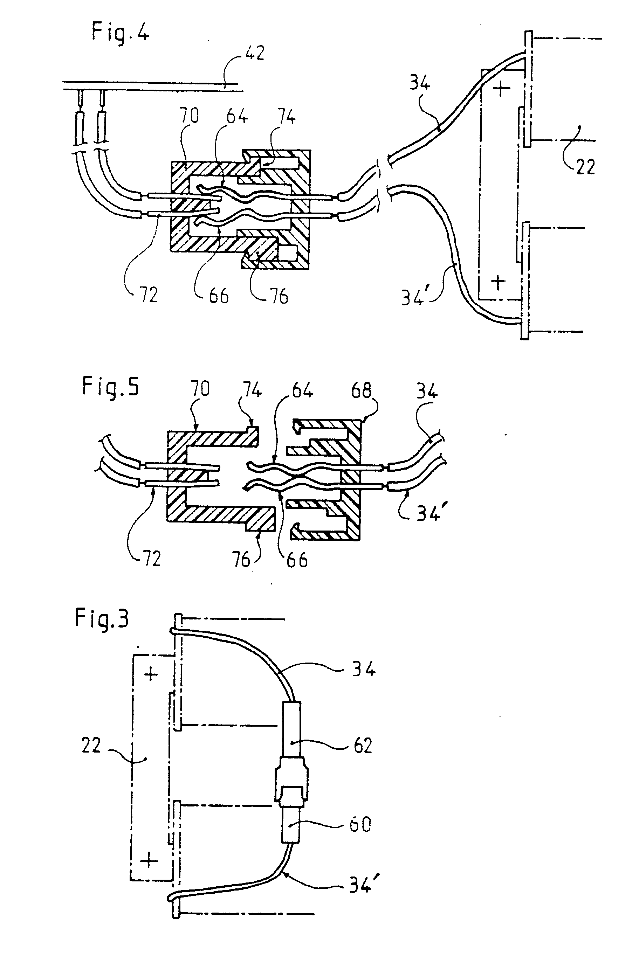

En se référant plus particulièrement aux figures 2 et 3, on voit que les conducteurs de raccordement 34 à 38 comportent chacun un raccord rapide constitué par une partie mâle 60 se fixant sur une partie femelle 62. Selon une caractéristique importante de l'invention, les deux conducteurs par exemple 34, 34', d'un transformateur de courant 22 sont l'un équipé d'une partie mâle 60, et l'autre d'une partie femelle 62, de manière à permettre après débranchement du déclencheur statique 26 un court-circuitage du transformateur de courant 22 (voir figure 3). Le raccordement des conducteurs de sortie et d'entrée 34, 34' du transformateur de courant 22 par clipsage des raccords 60, 62 évite tout claquage du transformateur de courant et tout risque d'électrocution des manipulateurs lorsque le sous-ensemble 26 est enlevé. Ce système de raccordement évite également toute erreur de branchement lors de la mise en place du déclencheur statique et constitue de ce fait un détrom peur. Les raccords 60, 62 peuvent être d'un type quelconque disponible dans le commerce et les figures 4 et 5 illustrent à titre d'exemple un autre mode de réalisation d'un raccord susceptible d'assurer la double fonction de détrompage et de court-circuitage.

En se référant aux figures 4 et 5, on voit que les conducteurs 34, 34' sont raccordés à deux lamelles flexibles 64, 66 d'un bornier 68 susceptible de recevoir à enfichage un bornier conjugué 70. Le bornier conjugué 70 porte une fiche 72 venant en position embrochée s'intercaler entre les lamelles 64, 66 ces dernières coopérant avec des parties conductrices ménagées sur les faces associées de la fiche 72. Les borniers 68, 70 présentent des pièces d'encliquetage mécanique 74, 76 dissymétriques de manière à imposer une position prédéterminée d'enfichage. Il est facile de voir qu'en position déconnectée, représentée à la figure 5, les lamelles 64, 66 viennent au contact en court-circuit le transformateur de courant 22, tandis qu'en position de connexion, représentée sur la figure 4, ces lamelles sont écartées et connectées respectivement aux conducteurs associés du bornier 70 assurant la connexion entre le transformateur de courant 22 et le dispositif de traitement électronique précité. Toute erreur de branchement est impossible par la dissymétrie des parties mécaniques de connexion 74, 76, tout autre dispositif opérant pouvant bien entendu être mis en oeuvre. Chaque paire de conducteurs 34, 34', 36, 36', 38, 38' est bien entendu équipée d'un tel dispositif de connexion, le bornier pouvant être commun ou individuel à chaque paire de conducteurs de raccordement.

## Revendications

1. Disjoncteur multipolaire à boîtier moulé (10) et à déclencheur statique, comprenant un dispositif électronique de traitement de signaux délivrés par des transformateurs de courant (22) associés à chaque pôle, ledit dispositif électronique de traitement appartenant à un sous-ensemble (26) inséré dans un compartiment (24) du boîtier moulé et délivrant un signal de déclenchement à un relais (28) de déclenchement en cas de surcharge ou de court-circuit, ledit compartiment (24) étant isolé d'une manière étanche de la partie restante de l'enceinte confinée par le boîtier moulé (10), ledit boîtier comprenant des orifices de vevtilation et etant constitué d'une base (12) et d'un couvercle (14), de telle façon que le dispositif électronique de traitement soit abrité des gaz de coupure engendrés dans l'enceinte, lesdits transformateurs de courant (22) étant logés dans ladite partie restante de l'enceinte, disjoncteur caractérisé en ce que ledit compartiment (24) est confiné par une cloison (46) étanche qui sépare le compartiment (24) de ladite partie restante de l'enceinte et par des parties des parois du couvercle (14), dont au moins une paroi comporte des orifices (52) de ventilation de manière à mettre librement en communication l'intérieur du compartiment (24) et le milieu ambiant, et à permettre une libre circulation de l'air dans le compartiment (24) et un refroidissement du dispositif électronique de traitement.

2. Disjoncteur selon la revendication 1, caractérisé par le fait que fait partie du sous-ensemble (26) ladite cloison étanche (46) et que le relais (28) de déclenchement est disposé du côté de ladite cloison étanche (46) orienté vers ladite partie restante.

3. Disjoncteur selon une des revendications 1 ou 2, caractérisé en ce que lesdits transformateurs de courant (22) sont reliés audit dispositif électronique de traitement par des conducteurs (34-38) pénétrant par une' traversée étanche dans ledit compartiment (24).

4. Disjoncteur selon une des revendications 1, 2 ou 3, caractérisé en ce que ledit sous-ensemble (26) est fixé d'une manière amovible dans ledit compartiment (24) et que les conducteurs de liaison (34-38) entre le sous-ensemble (26) et lesdits de courant (22) sont equipés d'un dispositif de connexion rapide (60, 62; 68, 70).

5. Disjoncteur selon la revendication 4, caractérisé en ce que ledit dispositif de connexion rapide est agencé pour permettre un court-circuitage des transformateurs de courant (22) en position déconnectée.

6. Disjoncteur selon une des revendications 4 ou 5, caractérisé en ce que ledit dispositif de connexion rapide est agencé pour assurer le détrompage lors de la connexion.

## Patentansprüche

1. Mehrpoliger Schalter mit Isoliergehäuse (10) und mit statischem Auslöser, mit einer elektronischen Vorrichtung zur Verarbeitung von Signalen, die von den jedem Pol zugeordneten Stromtransformatoren (22) gesendet werden, wobei die genannte elektronische Verarbeitungsvorrichtung zu einer in einem Abteil (24) des Isoliergehäuses eingefügten Untergruppe (26) gehört, und ein Auslösesignal an eine Auslösespule (28) abgibt, wenn eine Überlast oder ein Kurzschluss vorliegt, wobei das genannte Abteil (24) auf hermetische Weise von dem restlichen Teil des von dem Isoliergehäuse (10) gebildeten Raumes isoliert ist, und wobei das genannte Gehäuse Belüftungsöffnungen aufweist und von einem Sockel (12) und einem Deckel (14) gebildet wird, so dass die elektronische Verarbeitungsvorrichtung vor den im Gehäuse erzeugten Schaltgasen geschützt wird, wobei die genannten Stromtransformatoren (22) in dem restlichen Teil des Gehäuseraumes untergebracht sind, Schalter, dadurch gekennzeichnet, dass das genannte Abteil (24) von einer dichten, das Abteil (24) von dem restlichen Teil des Gehäuseraumes trennenden Trennwand (46) gebildet wird sowie von Teilen der Wände des Deckels (14), von denen wenigstens eine Wand Belüftungsöffnungen (52) aufweist, um das Innere des Abteils (24) und die äussere Atmosphäre frei zu verbinden, und um eine freie Luftzirkulation im Abteil (24) und eine Abkühlung der elektronischen Verarbeitungsvorrichtung zu erlauben.

2. Schalter gemäss Anspruch 1, dadurch gekennzeichnet, dass die genannte dichte Trennwand (46) ein Teil der Untergruppe (26) ist, und dass das Auslöserelais (28) auf der Seite der zum genannten restlichen Teil hin gerichteten dichten Trennwand (46) angeordnet ist.

3. Schalter gemäss einem der Ansprüche 1 oder 2, dadurch gekennzeichnet, dass die genannten Stromtransformatoren (2) mit der elektronischen Verarbeitungsvorrichtung durch Leiter (34-38) verbunden sind, die durch eine hermetische Durchführung in das genannte Abteil (24) eindringen.

4. Schalter gemäss einem der Ansprüche 1, 2 oder 3, dadurch gekennzeichnet, dass die genannte Untergruppe (26) auf abnehmbare Weise in dem genannten Abteil (24) angebracht ist und dass die Verbindungsleiter (34-38) zwischen der Untergruppe (26) und den genannten Stromtransformatoren (22) mit einer schnellen Verbindungsvorrichtung (60, 62; 68, 70) ausgerüstet sind.

5. Schalter gemäss Anspruch 4, dadurch gekennzeichnet, dass die genannte schnelle Verbindungsvorrichtung so ausgebildet ist, um in entkuppelter Lage ein Kurzschliessen der Stromtransformatoren (22) zu ermöglichen.

6. Schalter gemäss einem der Ansprüche 4 oder 5, dadurch gekennzeichnet, dass die genannte schnelle Verbindungsvorrichtung so ausgeführt ist, um jeglichen Irrtum bei der Verbindung zu vermeiden.

**Claims**

1. Multi-pole circuit breaker with molded case (10) and a static tripping device, comprising an electronic device to process the signals delivered by current transformers (22) associated with each pole, said electronic processing device being part of a subassembly (26) inserted in a compartment (24) of the molded case and delivering a tripping signal to a tripping coil (28) in the case of an overload or a short-circuit, said compartment (24) being sealed off from the rest part of the enclosure constituted by the molded case (10), said case comprising ventilation openings and being constituted by a base (12) and a cover (14) in such a way that the electronic processing device is protected from the circuit-breaking gases generated in the enclosure, said current transformers (22) being housed in said rest part of the enclosure, circuit breaker, characterized in that said compartment (24) is constituted by a sealed partition wall (46), which separates the compartment (24) of said rest part of the enclosure, and by parts of the walls of the cover (14) one of which at least comprises ventilation openings (52), in order to make open communication between the inside of the compartment (24) and the ambient atmosphere, and in order to allow an open circulation of the air in the compartment (24) and a cooling of the electronic processing device.

2. Circuit breaker according to claim 1, characterized by the fact that said sealed partition wall (46) belongs to the subassembly (26) and that the tripping relay (28) is arranged on the side of said sealed wall (46) directed towards said rest part.

3. Circuit breaker according to one of claims 1 or 2, characterized in that said current transformers (22) are connected with said electronic processing device by means of conductors (34-38) penetrating into said compartment (24) through a sealed bushing.

4. Circuit breaker according to one of the claims 1, 2 or 3, characterized in that said sub-assembly (26) is fastened in a removable manner in said compartment (24) and that the connection conductors (34-38) between the subassembly (26) and said current transformers (22) are provided with a fast connection device (60, 62; 68, 70).

5. Circuit breaker according to claim 4, characterized in that said fast connection device is arranged to permit a short-circuiting of the current transformers (22) in the disconnected position.

6. Circuit-breaker according to one of claims 4 or 5, characterized in that said fast connection device is arranged to ensure a right connection.

Fig.1

Fig. 2

EP 0 068 934 B2

Fig.4

42

70  64  74

34

+

22

72  66  76

34'

+

Fig.5

70  74  64  68  34

72  76  66

34'

Fig.3

+

22

34

62

+

60

34'